# EUROPEAN PATENT APPLICATION

(11) **EP 4 769 896 A1**
(43) Date of publication of application: **01.07.2026**
(21) Application number: 25221766.6
(22) Date of filing: 09.12.2025
(51) Int. Cl.: H02J 7/70, H01R 13/453

(54) **LINKED SLIDING DOORS FOR ELECTRICAL DEVICES**

(30) Priority: 27.12.2024 US 202419003161
(71) Applicant: Fluke Corporation, Everett, WA 98203 (US)
(72) Inventor: MURRAY, Marie, Everett, 98203 (US); PAGE, Simon J., Everett, 98203 (US); WOO, Ginger M., Everett, 98203 (US)
(74) Representative: HGF

(57) **Abstract**

A sliding door system is provided and may include a first sliding door and a second sliding door. When one of the first sliding door and the second sliding door is in an open position and the other of the first sliding door and the second sliding door is not in the open position, the sliding door system may be configured to prevent opening of the sliding door not in the open position. The first sliding door may have a main body positioned on a first plane. The second sliding door may have a main body positioned on a second plane. The second plane may be different than the first plane.

## Description

### BACKGROUND

### Technical Field

The present disclosure relates generally to a linked sliding door system, specifically a linked sliding door which may be utilized as part of an electrical measurement device.

### Description of the Related Art

A number of connections for electrical vehicle charging are available. The specific type of connection to be utilized may vary by vehicle manufacturer, country, or type of current provided. Electric Vehicle Supply Equipment ("EVSE") (sometimes referred to as "charging stations" or "vehicle chargers") are used to supply electrical energy to charge batteries in electric vehicles. EVSE are subject to inspection to ensure that the equipment is working properly and delivering the energy that is reported as being delivered. Due to the variety of connections available, it is desirable for electrical measurement devices for inspecting EVSE to provide multiple types of connections on a single measurement device. Multiple connections may be included on a common circuit, such that multiple connections are active simultaneously. In order to protect users of the electrical measurement device and to protect components of the electrical circuit, it is desirable for only a single connection of the electrical measurement device to be accessible by a user at a time.

### BRIEF SUMMARY

Disclosed is a sliding door system comprised of two sliding doors in which each sliding door is configured to open to provide access to an electrical connection. When one of the sliding doors is in an open position and the other sliding door is in a closed position, the sliding door system is configured to prevent opening of the sliding door in the closed position. The sliding door in the open position impedes movement of the sliding door in the closed position. Additionally, both sliding doors may be in the closed position simultaneously.

In some embodiments, the first and second sliding doors each may include a tab extending from the main body of the respective sliding door. The main body of the first sliding door may be positioned on a first plane and the main body of the second sliding door may be positioned on a second plane. The first plane is different from the second plane. When one of the first or second sliding door is in the open position, the tab of the first sliding door may prevent opening of the other of the first or second sliding door that is not in the open position (e.g., closed position). The tab of the second sliding door may extend from the main body of the second sliding door to an extent such that the first plane extends through the tab of the second sliding door.

In some embodiments, an interior face of a door system exterior may include at least one indent configured to receive a door locking component of the first and/or second sliding door therein. Indents may be positioned on a first side and/or a second side of the sliding door system. A first set of indents may be configured to releasably lock the first sliding door in either the open position or the closed position. A second set of indents may be configured to releasably lock the second sliding door in either the open position or the closed position. The door locking components may be configured as springs that are integrally formed as part of the first or second sliding door.

### BRIEF DESCRIPTION OF THE SEVERAL VIEWS OF THE DRAWINGS

Figure 1 shows a perspective view of an electrical measurement device including a sliding door system.
Figure 2 shows a perspective view of the sliding door system in a fully closed position.
Figure 3 shows a cross-sectional side view of the sliding door system in the fully closed position.
Figure 4 shows a top plan view of the sliding door system in the fully closed position.
Figure 5 shows a perspective view of the sliding door system with a first sliding door in an open position.
Figure 6 shows a cross-sectional side view of the sliding door system with the first sliding door in the open position.
Figure 7 shows a top plan view of the sliding door system with the first sliding door in the open position.
Figure 8 shows a perspective view of the sliding door system with a second sliding door in an open position.
Figure 9 shows a cross-sectional side view of the sliding door system with the second sliding door in the open position.
Figure 10 shows a top plan view of the sliding door system with the second sliding door in the open position.
Figure 11 shows a cross-sectional top view of the sliding door system with the first sliding door in the closed position.
Figure 12 shows a cross-sectional top view of the sliding door system with the first sliding door between the closed position and the open position.
Figure 13 shows a cross-sectional top view of the sliding door system with the first sliding door in the open position.
Figure 14 shows a cross-sectional top view of the sliding door system with the second sliding door in the closed position.

### DETAILED DESCRIPTION

Described herein are embodiments of a sliding door system that include first and second sliding doors. The sliding door system is configured such that only one of the first or second sliding doors can in an open position. The sliding door that is in the open position impedes movement of the other sliding door and thus prevents the other sliding door from opening. When implemented in an electrical measurement device as described herein, the first and second sliding doors (when in the open position) provide access to different electrical connections of the electrical measurement device.

In some embodiments, the first sliding door has a main body positioned on a first plane. The second sliding door has a main body positioned on a second plane. The second plane is different than the first plane. The tab of the second sliding door may extend from the main body of the second sliding door to an extent such that the first plane extends through the tab of the second sliding door. In such embodiments, when one of the first or second sliding door is in the open position, the tab of the first sliding door may prevent opening of the other of the first or second sliding door that is not in the open position.

In some embodiments, an interior face of the door system exterior includes at least one indent configured to receive therein a door locking component of the first or second sliding door. The indent is configured to releasably lock the first sliding door or the second sliding door in the open position or the closed position.

In the following description, certain specific details are set forth in order to provide a thorough understanding of various disclosed embodiments. However, one skilled in the relevant art will recognize that embodiments may be practiced without one or more of these specific details. In other instances, well-known structures and techniques associated with sliding door systems may not be shown or described in detail to avoid unnecessarily obscuring descriptions of the embodiments.

Reference throughout this specification to "one embodiment" or "an embodiment" means that a particular feature, structure, or characteristic described in connection with the embodiment is included in at least one embodiment. Additionally, the appearances of the phrases "in one embodiment" or "in an embodiment" in this specification are not necessarily all referring to the same embodiment. Furthermore, the particular features, structures, or characteristics described herewith with respect to one or more embodiments may be combined in any suitable manner in one or more additional embodiments.

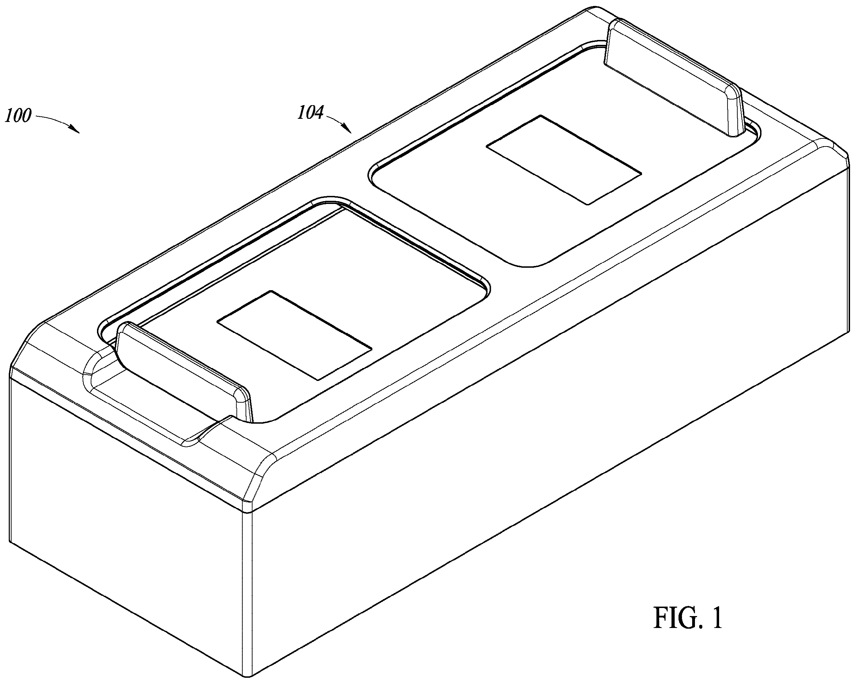

Figure 1 shows an electrical measurement device 100 configured, for example, for inspecting EVSE. The electrical measurement device 100 includes two electrical connections, each of which is configured to receive a different type of electrical connection. For example, each electrical connection may be configured to receive any of a Type 1 connection, a Type 2 connection, a CCS Type 1 connection, a CCS Type 2 connection, a NACS connection, or any other type of electrical vehicle charging connection. Both electrical connections may be included on a common circuit within the electrical measurement device 100, such that both electrical connections are active simultaneously. However, during use of the electrical measurement device 100, only one of the electrical connections will be utilized. In order to protect a user of the electrical measurement device 100, and the device 100 itself, a sliding door system 104 is implemented on the electrical measurement device 100 which restricts access to, at most, one electrical connection at a time.

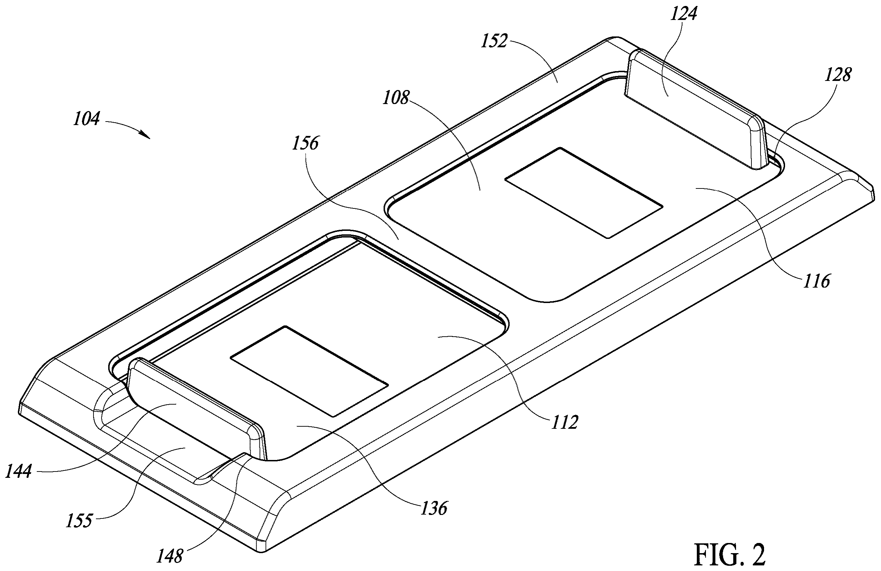

Figures 2-14 show the sliding door system 104 separate from the electrical measurement device 100. The sliding door system 104 may include a first sliding door 108 and a second sliding door 112, which are both shown in closed positions in Figures 2-4. Each of the first and second sliding doors 108, 112 are configured to linearly slide between open and closed positions. An advantage of the sliding door system 104 is that both the first sliding door 108 and the second sliding door 112 may be in a closed position simultaneously. When a sliding door is in a closed position, the closed sliding door restricts access to an electrical connection (not shown) associated therewith.

The first sliding door 108 may include a main body 116 positioned on a first plane 120. The first sliding door 108 may also include a tab 124 extending from the main body 116. The tab 124 may be positioned on a distal end 128 of the main body 116 relative to a longitudinal center 132 of the door sliding system 104.

The second sliding door 112 may include a main body 136 positioned on a second plane 140. The second sliding door 112 may also include a tab 144 extending from the main body 136. The tab 144 may be positioned on a distal end 148 of the main body 136 relative to the longitudinal center 132 of the door sliding system 104.

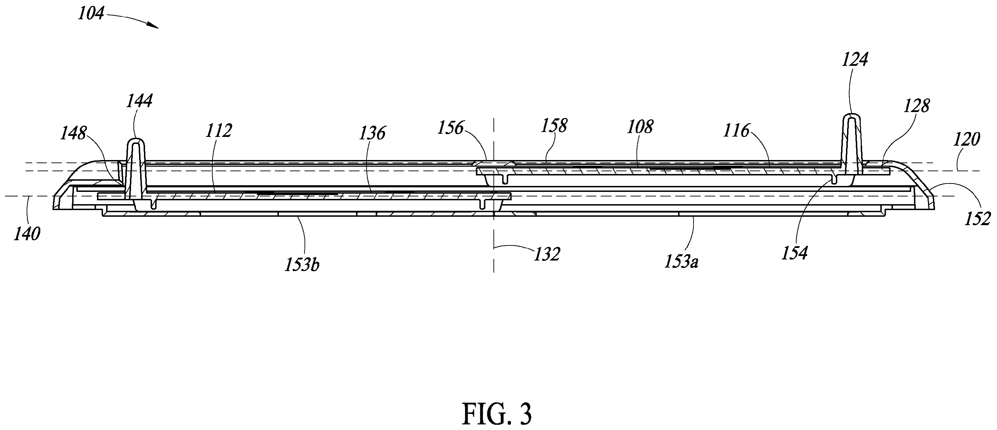

The second plane 140 is a different plane than the first plane 120, as shown in the cross-sectional view of the sliding door system 104 in Figure 3. In some embodiments, the first plane 120 and the second plane 140 may be parallel. In the example embodiments shown throughout figures, the first plane 120 is above the second plane 140.

The tab 144 of the second sliding door 112 may extend from the main body 136 of the second sliding door 112 to an extent such that the first plane 120 extends through the tab 144 of the second sliding door 112.

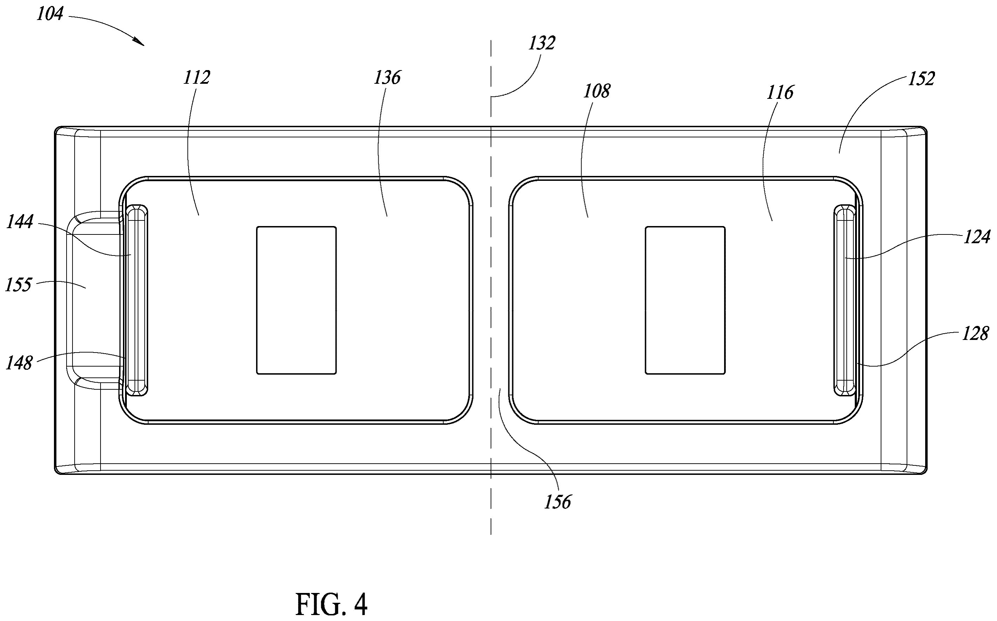

The sliding door system 104 may also include an exterior body 152 surrounding at least a portion of each of the first and second sliding doors 108, 112, as shown in Figures 2 and 4. The exterior body 152 may include apertures 153a, 153b (see Figure 3), through which electrical connections of the electrical measurement device 100 may be accessed when the respective sliding door 108, 112 is in an open position. The apertures 153a, 153b may be shaped to correspond to a shape of the corresponding electrical connection.

As shown in Figures 2 and 4, the exterior body 152 may define at least one access space 155, in some cases appearing as a notch, that is configured to enable easier gripping of at least one of the tabs 124, 144. In some embodiments, the exterior body 152 may include a spacer 154 (see Figure 3) between the main body 116 of the first sliding door 108 and the main body 136 of the second sliding door 112. The spacer 154 may be configured to prevent contact of the main body 116 of the first sliding door 108 with the main body 136 of the second sliding door 112. The spacer 154 may be integrally formed with the exterior body 152, or may be a separate component. The spacer 154 may be a single piece or may comprise multiple pieces.

The exterior body 152 may include a center limiting bar 156 which extends laterally across the sliding door system 104. In some embodiments, the center limiting bar 156 may extend laterally at the longitudinal center 132 of the door sliding system 104. A plane 158 on which the center limiting bar 156 lies may intersect with at least one of the tab 124 of the first sliding door 108 and the tab 144 of the second sliding door 112.

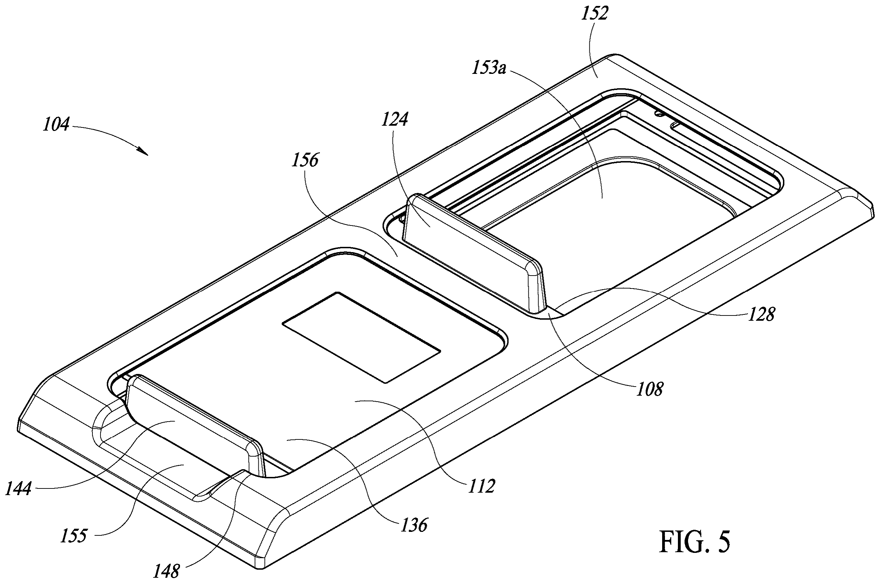

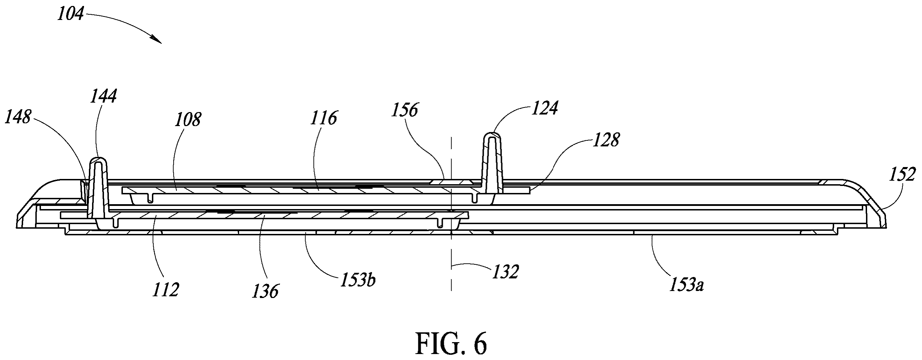

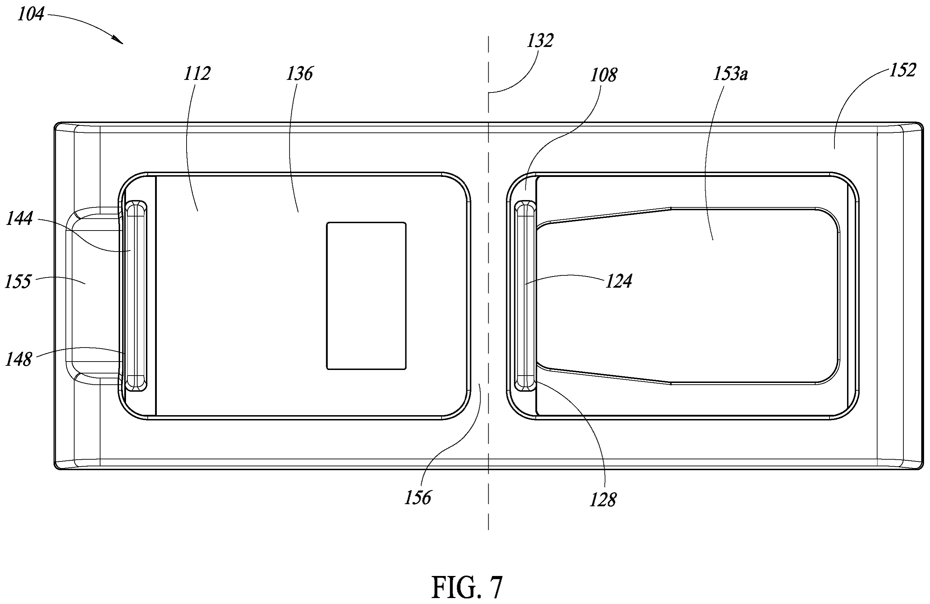

The sliding door system 104 is configured such that when one of the first sliding door 108 or the second sliding door 112 is in an open position and the other of the first sliding door 108 or the second sliding door 112 is not in an open position (e.g., in a closed position), the sliding door not in the open position is prevented from opening. For example, Figures 5-7 show the sliding door system 104 in a state in which the first sliding 108 is in an open position and the second sliding door 112 is in a closed position. In such a position, the second sliding door 112 is prevented from opening by the first sliding door 108 impeding movement of the second sliding door 112. Specifically, Figure 6 shows the tab 144 of the second sliding door 112 is prevented from moving due to the position of the main body 116 of the first sliding door 108 interfering with or impeding movement of the tab 144. In such a position, the aperture 153a for the electrical connection associated with the first sliding door 108 is accessible, as shown in Figures 5 and 7.

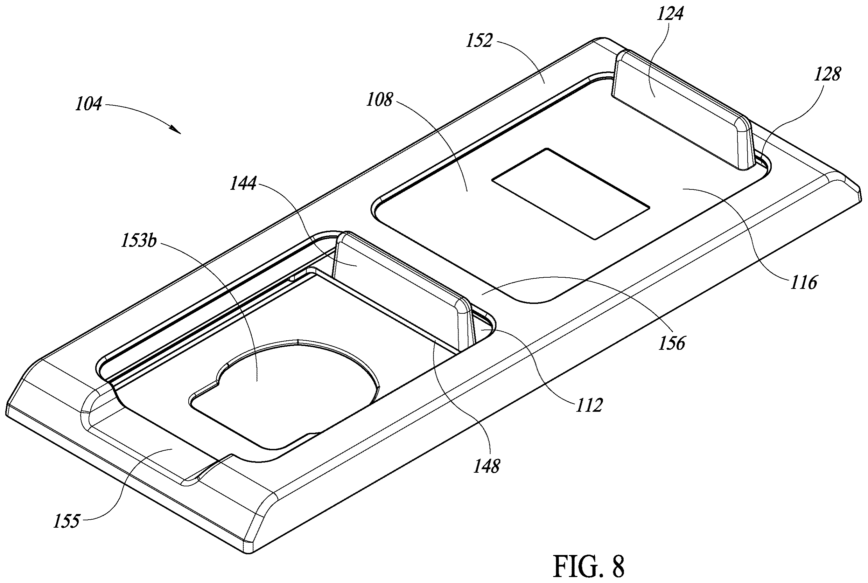

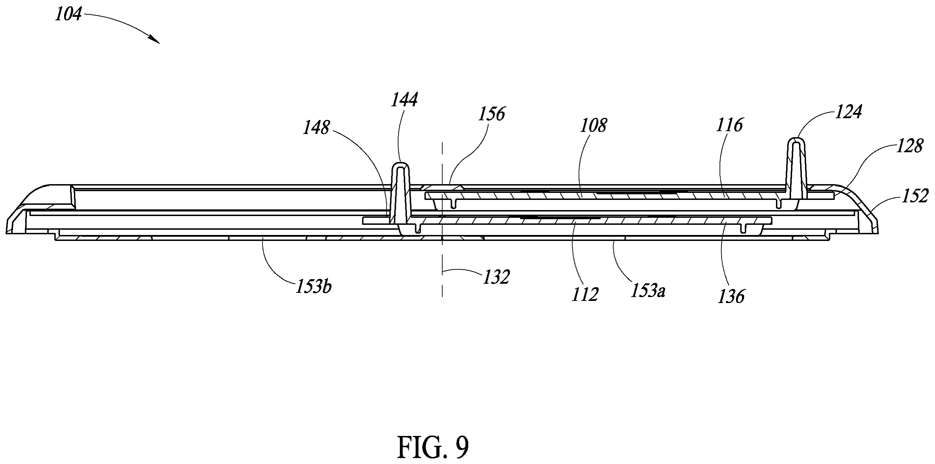

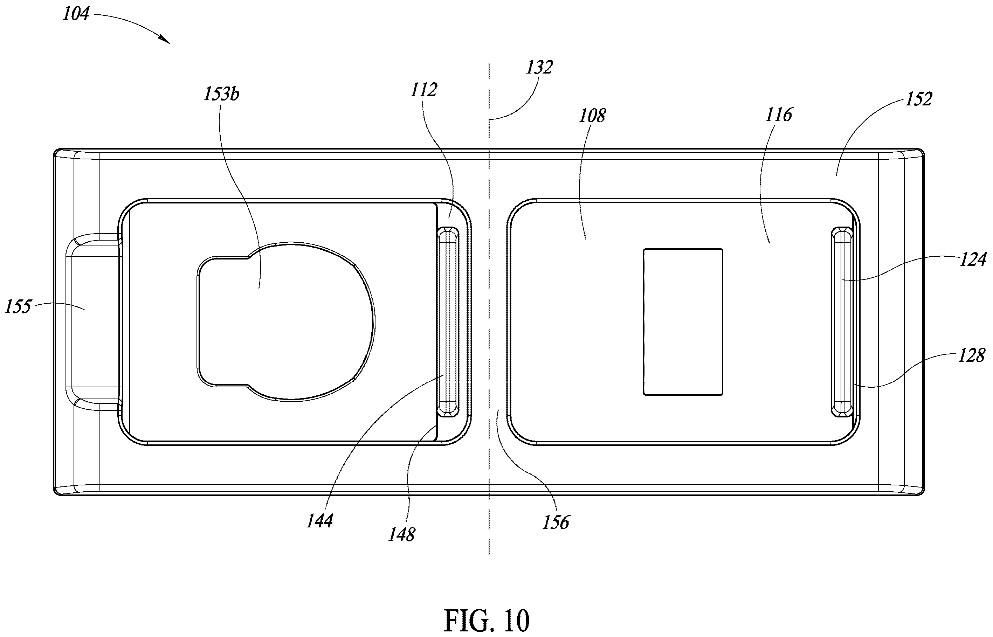

Figures 8-10 show another example state in which the second sliding door 112 is in the open position and the first sliding door 108 is prevented from opening. In such a position, movement of the first sliding door 108 in an opening direction is limited by the tab 144 of the second sliding door 112, as shown most clearly in Figure 9. Movement of the main body 116 of the first sliding door 108 in the opening direction is blocked by the tab 144 of the second sliding door 112. In such a position, the aperture 153b for the electrical connection associated with the second sliding door 112 is accessible, as shown in Figures 8 and 10.

An opening extent of each of the first sliding door 108 and the second sliding door 112 may be limited by the center limiting bar 156. In other words, the center limiting bar 156 may limit further opening movement of the first or second sliding door 108, 112 when the first or second sliding door 108, 112 is in the open position. Such limiting may be accomplished, for example, by the tab 124, 144 of the respective sliding door in the open position contacting the center limiting bar 156 while in the open position.

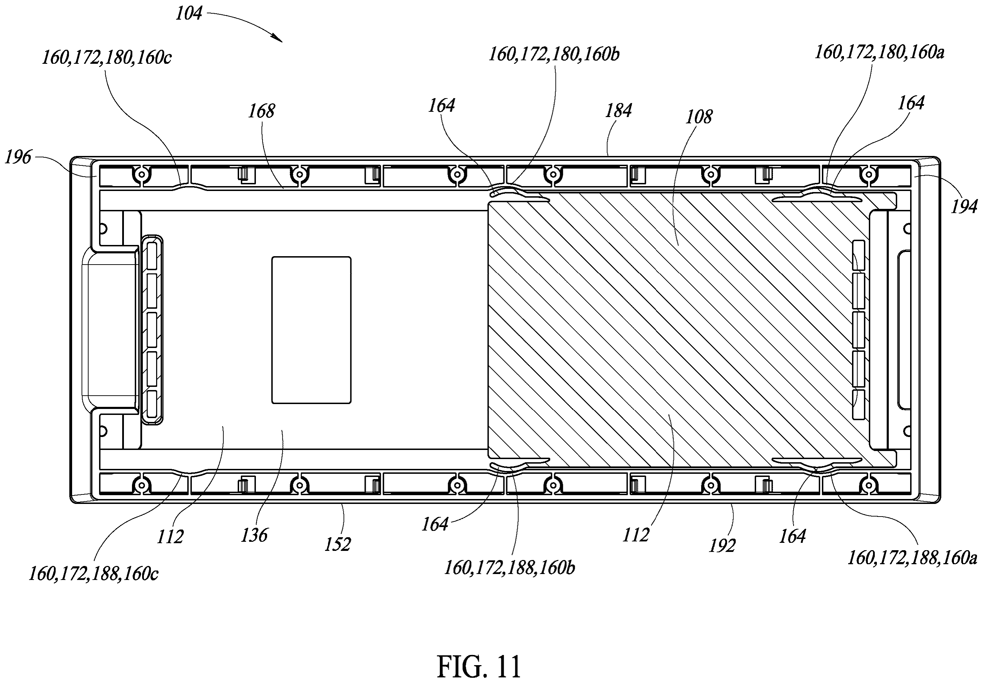

The sliding door system 104 may also include a releasable locking system configured to maintain the first and second sliding doors 108, 112 in the open or closed positions. For example, as shown in Figure 11, the releasable locking system may include at least one indent 160 and corresponding door locking components 164. The at least one indent 160 may be disposed on an interior face 168 of the exterior body 152. The at least one indent 160 may be configured to receive a door locking component 164 of either of the first or second sliding door 108, 112 therein.

A first set 172 of indents 160 may be located on the first plane 120, such that the first set 172 of indents 160 are coplanar with the main body 116 of the first sliding door 108. Such indents 160 are shown in Figures 11-13, which are cross-sectional views taken on the first plane 120. The first set 172 of indents 160 may be configured to releasably lock (or hold) the first sliding door 108 in the open position and/or the closed position.

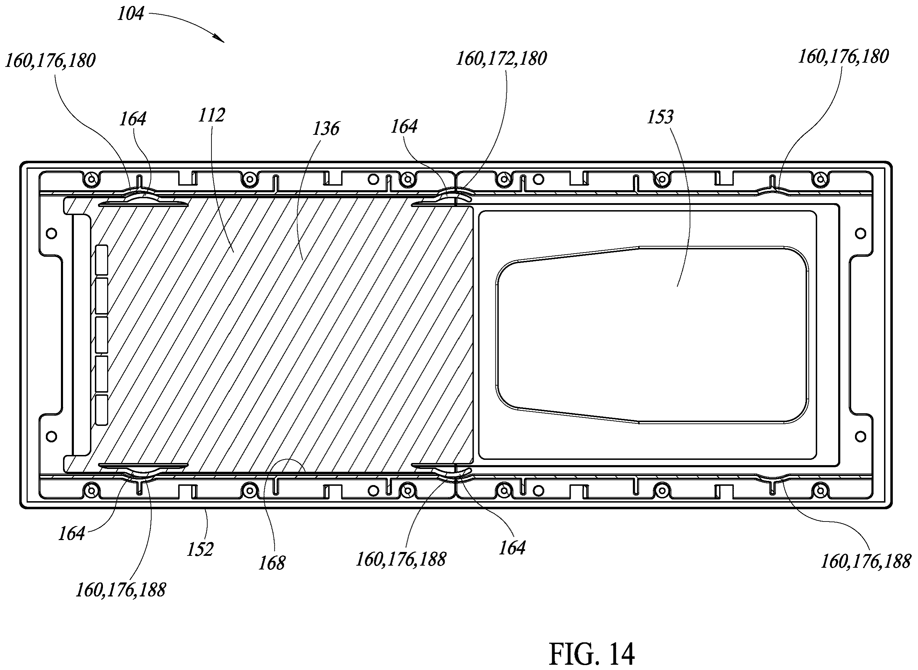

A second set 176 of indents 160 may be located on the second plane 140, such that the second set 176 of indents 160 are coplanar with the main body 136 of the second sliding door 112. Such indents 160 are shown in Figure 14, which is a cross-sectional view taken on the second plane 140. The second set 176 of indents 160 may be configured to be used to releasably lock (or hold) the second sliding door 112 in the open position and/or the closed position.

Figures 11-14 show that a first plurality 180 of indents 160 may be positioned on a first longitudinal side 184 of the sliding door system 104 and that a second plurality 188 of indents 160 may be positioned on a second longitudinal side 192 of the sliding door system 104. The second longitudinal side 192 of the sliding door system 104 opposes the first longitudinal side 184 of the sliding door system 104.

The first set 172 of indents 160 may include indents 160 from both the first plurality 180 of indents 160 and the second plurality 188 of indents 160, as most clearly shown in Figures 11-13. In other words, the first set 172 of indents 160 may be positioned on both the first and second longitudinal sides 184, 192. In such configurations, the main body 116 of the first sliding door 108 may be configured to releasably lock to the external body 152 on both the first longitudinal side 184 and the second longitudinal side 192 in either or both of the open or closed positions.

The second set 176 of indents 160 may include indents 160 from both the first plurality 180 of indents 160 and the second plurality 188 of indents 160, as most clearly shown in Figure 14. In other words, the second set 176 of indents 160 may be positioned on both the first and second longitudinal sides 184, 192. In such configurations, the main body 136 of the second sliding door 112 may be configured to releasably lock to the external body 152 on both the first longitudinal side 184 and the second longitudinal side 192 in either or both of the open or closed positions.

In some embodiments, each of the first set 172 and second set 176 of indents 160 may include six indents 160. Each of the first set 172 and second set 176 of indents may include three indents from the first plurality 180 of indents and three indents from the second plurality 188 of indents 160. The description of the indents 160 below is described as part of the first set 172 of indents 160, but the teachings equally apply to the second set 176 of indents 160. The first set 172 of indents 160 from the first plurality 180 of indents 160 may be spaced evenly from one another in along a longitudinal length the sliding door system 104. For example, in the embodiment shown throughout the figures, on each longitudinal side 184, 192, a first indent 160a is positioned adjacent to a first end 194 of the sliding door system 104, a second indent 160b is positioned at the longitudinal center 132 of the sliding door system 104, and a third indent 160c is positioned adjacent to a second end 196 of the sliding door system 104. Even spacing of the first set 172 of indents 160 may enable locking of the first sliding door 108 in either the open position or the closed position, which will be described in further detail below.

The door locking components 164 of the first and second sliding doors 108, 112 may be configured as springs. The door locking components 164 of the first sliding door 108 may be integrally formed as part of the main body 116 of the first sliding door 108, as shown in Figures 11-13. In the same manner, door locking components 164 of the second sliding door 112 may be integrally formed as part of the main body 136 of the second sliding door 112, as shown in Figure 14. For example, in the embodiment shown throughout the figures, the door locking components 164 are curved extensions from the main body which are biased away from the main body of the respective sliding door. When the respective sliding door is between the open and closed positions, the door locking components 164 may be compressed toward the respective main body by the interior face 168 of the exterior body 152. Outward bias of the door locking components 164 thus requires additional force to be applied in order to move the respective sliding door from an open or closed position.

The door locking components 164 may be arranged to be received in an indent 160 when the respective sliding door of which the door locking components form a part is in the closed position and/or the open position. As can be seen in the embodiment illustrated in the figures, the first sliding door 108 and second sliding door each include four door locking components 164, with two positioned on each longitudinal side of the respective sliding door 108, 112. The spacing of door locking components 164 on the same side of the main body 116, 136 is equivalent to the spacing between two longitudinally separated indents 160. Because of the equivalent spacing of the door locking components 164 and the indents 160, multiple door locking components 164 of a sliding door 108, 112 may be received in a corresponding number of indents when in either the open or closed position.

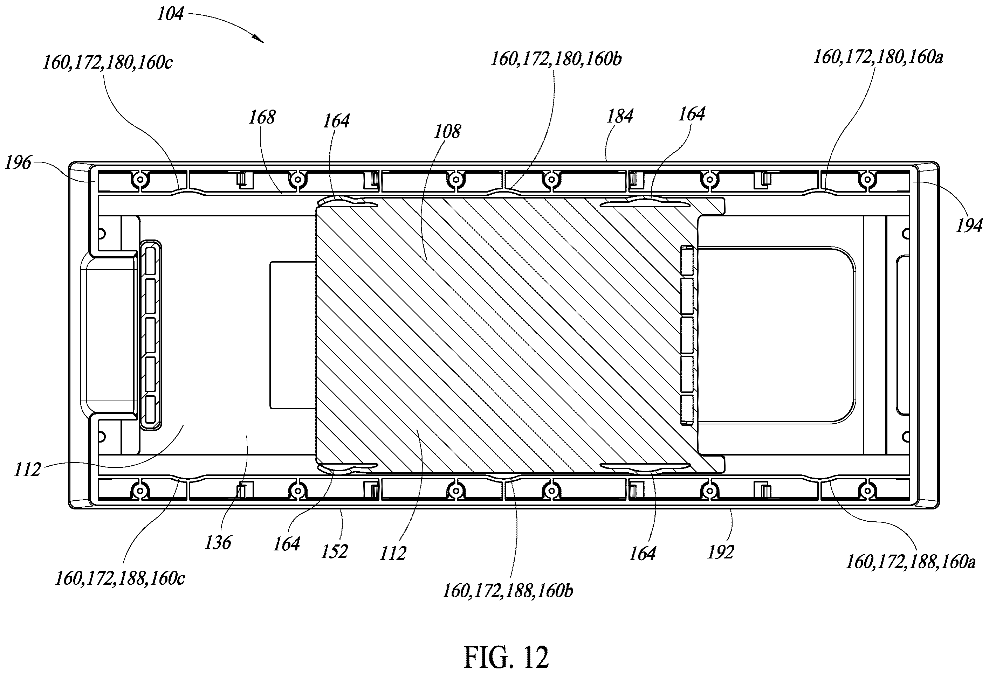

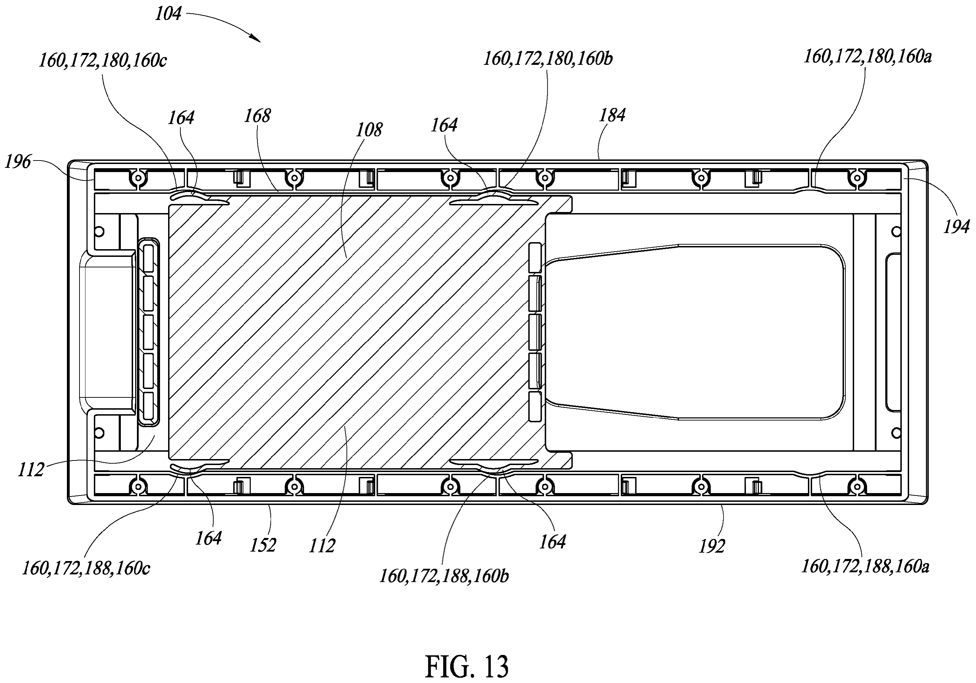

An example transition of the first sliding door 108 from the closed position to the open position is shown in Figures 11-13. In Figure 11, the first sliding door 108 is in the closed position. In the closed position, the door locking components 164 of the first sliding door 108 are received in closed position indents 160a, 160b of the first set 172 of indents 160. Figure 12 shows the first sliding door 108 during the transition from the closed position to the open position. During the transition, the door locking components 164 are not positioned in any indents 160 of the first set 172 of indents 160. In Figure 12, the door locking components 164 are compressed toward the main body 116 of the first sliding door 108 and do not lock the first sliding door 108 in a position. Figure 13 shows the first sliding door 108 in the open position, which includes the door locking components 164 of the first sliding door 108 being received in open position indents 160b, 160c of the first set 172 of indents 160. As can be seen in Figures 11-13, an individual indent may act as both a closed position indent and an open position indent, which in the example shown in the figures is true of indents 160b.

Figure 14 shows the second sliding door 112 in a closed position with door locking components 164 of the second sliding door being received in closed position indents 160a, 160b of the second set 176 of indents. Although the figures do not display the transition of the second sliding door 112 from the closed position to the open position, it should be understood that the function of the door locking components 164 of the second sliding door 112 during such a transition is identical to the function of the door locking components 164 of the first sliding door 108 during a transition thereof.

The sliding door system described herein may be adapted to a variety of pieces of equipment or machinery, including those not related to electrical measurement devices. Such sliding door systems provide improved access control to sensitive areas, products, connections within such equipment or machinery when only a single area, product, or connection is to be accessible at a time.

The devices and systems of the present disclosure each have several innovative aspects, no single one of which is solely responsible or required for the desirable attributes disclosed herein. The various features described above may be used independently of one another, or may be combined in various ways. All possible combinations and subcombinations of such features are intended to fall within the scope of this disclosure. Various modifications to the implementations described in this disclosure may be readily apparent to those of ordinary skill in the art, and the generic principles defined herein may be applied to other implementations. Thus, the claims are not intended to be limited to the specific implementations shown by way of example herein, but are to be accorded the widest scope consistent with this disclosure, the principles and the novel features disclosed herein.

Certain features that may be described in this specification in the context of separate implementations also may be implemented in combination in a single implementation. Conversely, various features that may be described in the context of a single implementation also may be implemented in multiple implementations separately or in any suitable subcombination. Moreover, although features may be described above as acting in certain combinations and even initially claimed as such, one or more features from a claimed combination can be excised from the combination, and the claimed combination may be directed to a subcombination or variation of a subcombination. No single feature or group of features is necessary or indispensable to each and every embodiment.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments. The terms "comprising," "including," "having," and the like are synonymous and are used inclusively, in an open-ended fashion, and do not exclude additional elements, features, acts, operations, and so forth. Also, the terms "or" and "and/or" are used in their inclusive sense (and not in their exclusive sense) so that when used, for example, to connect a list of elements, the terms "or" and "and/or" mean one, some, or all of the elements in the list. In addition, the articles "a," "an," and "the" as used in this application and the appended claims are to be construed to mean "one or more" or "at least one" unless specified otherwise.

Thus, by way of an example, a sliding door system may include a first sliding door and second sliding door configured such that when one of the first sliding door or the second sliding door is in an open position and the other of the first sliding door and the second sliding door is not in the open position, the sliding door system is configured to prevent opening of the sliding door not in the open position. The sliding door in the open position may be configured to impede movement of the sliding door that is not in the open position. The sliding door system may be configured such that the first sliding door and the second sliding door can both be closed.

By way of example, a sliding door system may include a first sliding door having a main body positioned on a first plane and a second sliding door having a main body positioned on a second plane, the second plane being different than the first plane. The sliding door system may include a door system exterior that optionally includes a center limiting bar. When either of the first or second sliding door is in the open position, the center limiting bar may limits further opening of the first or second sliding door in the open position. The first or second sliding door in the open position may be configured to prevent opening of the other of the first or second sliding door that is not in the open position.

The sliding door system may optionally include any of the following features, in any combination: the first plane is parallel to the second plane; the first sliding door includes a tab extending from the main body of the first sliding door and the second sliding door includes a tab extending from the main body of the second sliding door; when one of the first or second sliding door is in the open position, the tab of the first or second sliding door in the open position prevents opening of the other of the first or second sliding door that is not in the open position; the tab of the first sliding door and the tab of the second sliding door are disposed on a distal end of the respective sliding door; the distal end being spaced away from the center limiting bar when the respective door is in a closed position; the tab of the second sliding door extends from the main body of the second sliding door to an extent such that the first plane extends through the tab of the second sliding door; an interior face of the door system exterior includes at least one indent configured to receive a door locking component of the first sliding door therein; the interior face of the door system exterior includes at least one indent configured to receive a door locking component of the second sliding door therein; a first plurality of indents is positioned on a first side the sliding door system; a second plurality of indents is positioned on a second side of the sliding door system; the second side of the sliding door system opposing the first side of the sliding door system; a first set of indents are configured to releasably lock the first sliding door in either the open position or the closed position; a second set of indents are configured to releasably lock the second sliding door in either the open position or the closed position; the first set of indents includes three indents on the first side of the sliding door system and three indents on the second side of the sliding door system; the second set of indents includes three indents on the first side of the sliding door system and three indents on the second side of the sliding door system; the door locking component of the first sliding door is configured as a spring; the door locking component of the second sliding door is configured as a spring; the door locking components of the first sliding door are integrally formed as part of the first sliding door; the door locking components of the second sliding door are integrally formed as part of the second sliding door; the first sliding door and the second sliding door are configured such that both the first and second sliding doors are positionable in a closed position simultaneously; the door system exterior includes a spacer between the main body of the first sliding door and the main body of the second sliding door, the spacer configured to prevent contact of the main body of the first sliding door with the main body of the second sliding door; and/or the first sliding door and second sliding door are configured to limit access to a respective electrical connection when not in the open position.

In general, in the following claims, the terms used should not be construed to limit the claims to the specific embodiments disclosed in the specification and the claims, but should be construed to include all possible embodiments along with the full scope of equivalents to which such claims are entitled.

## Claims

1. A sliding door system comprising:
a first sliding door; and
a second sliding door;
wherein when one of the first sliding door or the second sliding door is in an open position and the other of the first sliding door or the second sliding door is not in the open position, the sliding door system is configured to prevent opening of the sliding door that is not in the open position.

2. The sliding door system of claim 1, wherein the sliding door in the open position impedes movement of the sliding door that is not in the open position; or
wherein the sliding door system is configured such that the first sliding door and the second sliding door are both positionable in a closed position.

3. A sliding door system comprising:
a first sliding door having a main body positioned on a first plane; and
a second sliding door having a main body positioned on a second plane, the second plane being different than the first plane,
wherein the first or second sliding door in the open position prevents opening of the other of the first or second sliding door that is not in the open position.

4. The sliding door system of claim 3, further comprising:
a door system exterior including a center limiting bar,
wherein when either of the first sliding door or the second sliding door is in the open position, the center limiting bar limits further opening of the first or second sliding door in the open position.

5. The sliding door system of claim 3 or claim 4, wherein the first sliding door includes a tab extending from the main body of the first sliding door and the second sliding door includes a tab extending from the main body of the second sliding door, and
wherein when one of the first or second sliding door is in the open position, the tab of the first or second sliding door in the open position prevents opening of the other of the first or second sliding door that is not in the open position.

6. The sliding door system of claim 5, wherein the tab of each of the first sliding door and the second sliding door are disposed on a distal end of the respective sliding door, the distal end being spaced away from a longitudinal center of the sliding door system; or
wherein the tab of the second sliding door extends from the main body of the second sliding door to an extent such that the first plane extends through the tab of the second sliding door.

7. The sliding door system of any one of claims 3 to 6, wherein an interior face of the door system exterior includes at least one indent configured to receive a door locking component of the first sliding door therein, and
wherein the interior face of the door system exterior includes at least one indent configured to receive a door locking component of the second sliding door therein.

8. The sliding door system of claim 7, wherein a first plurality of indents is positioned on a first side the sliding door system, and
wherein a second plurality of indents is positioned on a second side of the sliding door system, the second side of the sliding door system opposing the first side of the sliding door system.

9. The sliding door system of claim 8, wherein a first set of indents are configured to releasably lock the first sliding door in either the open position or the closed position, and
wherein a second set of indents are configured to releasably lock the second sliding door in either the open position or the closed position.

10. The sliding door system of claim 9, wherein the first set of indents includes three indents on the first side of the sliding door system and three indents on the second side of the sliding door system, and
wherein the second set of indents includes three indents on the first side of the sliding door system and three indents on the second side of the sliding door system.

11. The sliding door system of any one of claims 7 to 10, wherein the door locking component of the first sliding door is configured as a spring, and the door locking component of the second sliding door is configured as a spring; or
wherein the door locking components of the first sliding door are integrally formed as part of the first sliding door, and the door locking components of the second sliding door are integrally formed as part of the second sliding door.

12. The sliding door system of any one of claims 3 to 11, wherein the first sliding door and the second sliding door are configured such that both the first and second sliding doors are positionable in a closed position simultaneously; or
wherein the first sliding door and second sliding door are configured to limit access to a respective electrical connection when not in the open position.

13. The sliding door system of any one of claims 3 to 12, wherein the door system exterior includes a spacer between the main body of the first sliding door and the main body of the second sliding door, the spacer configured to prevent contact of the main body of the first sliding door with the main body of the second sliding door.

14. An electrical charging connection system comprising:
a first electrical connection;
a first door configured to limit access to the first electrical connection when the first door is in a closed position;
a second electrical connection;
a second door configured to limit access to the second electrical connection when the second door is in a closed position,
wherein the first door and the second door are configured such that at least one of the first door and the second door is not moveable to an open position when the other of the first door and the second door is in an open position.

15. The electrical charging system of claim 14, wherein the first electrical connection and the second electrical connection are simultaneously configured to be live electrical connections; or
wherein each of the first door and the second door includes a tab configured such that, when a respective one of the first door or the second door is in the open position, the tab limits movement of the other of the first door or the second door from the closed position.
